(19) Europäisches Patentamt
European Patent Office
Office européen des brevets

(11) **EP 4 621 880 A1**

(12) **EUROPEAN PATENT APPLICATION**
published in accordance with Art. 153(4) EPC

(43) Date of publication:
**24.09.2025 Bulletin 2025/39**

(21) Application number: **23907805.8**

(22) Date of filing: **21.12.2023**

(51) International Patent Classification (IPC):
*H01M 4/505* [(2010.01)]   *H01M 4/525* [(2010.01)]
*H01M 4/131* [(2010.01)]   *H01M 10/052* [(2010.01)]
*H01M 4/02* [(2006.01)]

(52) Cooperative Patent Classification (CPC):
**H01M 4/02; H01M 4/131; H01M 4/505;**
**H01M 4/525; H01M 10/052**

(86) International application number:
**PCT/KR2023/021251**

(87) International publication number:
**WO 2024/136522 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.12.2022   KR 20220183709**
**20.12.2023   KR 20230187698**

(71) Applicant: **LG Energy Solution, Ltd.**
**Seoul 07335 (KR)**

(72) Inventors:
• **SHIN, Donghwa**
**Daejeon 34122 (KR)**
• **LEE, Boram**
**Daejeon 34122 (KR)**
• **PARK, Sojung**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, AND CATHODE AND LITHIUM SECONDARY BATTERY COMPRISING SAME**

(57)    The present disclosure relates to a positive electrode active material comprising a lithium-rich manganese-based transition metal oxide, wherein the denseness (P) derived by the following Equation 1 is 42 to 50, wherein the positive electrode active material optimizes the ratio between the lattice parameter of the unit cell and the rolling density under low pressure to maximize the denseness between particles, thereby providing a positive electrode capable of having an optimal density after electrode coating and rolling.

[Equation 1]

$$P = V_{unit-cell} / d_{400}$$

in Equation 1, $V_{unit-cell}$ is the volume ($Å^3$) of the unit cell, which is derived through the following Equation 2, and $d_{400}$ is the rolling density ($g/cm^3$) when rolling at 400 kgf,

[Equation 2]

$$V_{unit-cell} = 3\sqrt{3} \times (a^2/2) \times (c/3)$$

EP 4 621 880 A1

in Equation 2, a and c are crystal lattice parameters (Å) derived from XRD measurements of the positive electrode active material.

**Description**

**[TECHNICAL FIELD]**

Cross Citation with Related Application(s)

This application claims the benefit of Korean Patent Application No. 10-2022-0183709 filed on December 23, 2022 with the Korean Intellectual Property Office, the disclosure of which is incorporated herein by reference in its entirety.
The present disclosure relates to a positive electrode active material for a secondary battery, a positive electrode comprising the same, and a lithium secondary battery.

**[BACKGROUND]**

Lithium secondary batteries generally consist of a positive electrode, a negative electrode, a separator, and an electrolyte, wherein the positive electrode and the negative electrode include an active material capable of intercalation and de-intercalation of lithium ions.
As a positive electrode active material for lithium secondary batteries, lithium cobalt oxide ($LiCoO_2$), lithium nickel oxide ($LiNiO_2$), lithium manganese oxide ($LiMnO_2$ or $LiMnO_4$, etc.), lithium iron phosphate compound ($LiFePO_4$), and the like have been used. Among these, lithium cobalt oxide has the advantage of high operating voltage and excellent capacity characteristics, but the price of cobalt, which is a raw material, is high and its supply is unstable, which makes it difficult to apply it commercially to large-capacity batteries. Lithium nickel oxide has poor structural stability, which makes it difficult to achieve sufficient life characteristics. On the other hand, lithium manganese oxide has excellent stability, but has the problem that capacity characteristics deteriorate. Thus, in order to compensate for the problems of lithium transition metal oxides containing Ni, Co, or Mn alone, a lithium nickel-based transition metal oxide containing two or more types of transition metals have been developed. Among these, a lithium nickel cobalt manganese oxide containing Ni, Co, and Mn is widely used in the field of electric vehicle batteries.
Recently, the demand for high-output and high-capacity batteries, such as batteries for electric vehicles, is increasing, and accordingly, the nickel content in positive electrode active materials tends to gradually increase. When the nickel content in the positive electrode active material increases, the initial capacity characteristics are improved, but there are problems that a large amount of highly reactive $Ni^{+4}$ ions are generated during electrode rolling or in a charge and discharge process, which causes structural collapse of the positive electrode active material, an increase of surface side reactions, an increase of the deterioration rate of the positive electrode active material, a decrease in life characteristics, and a reduction in battery safety.
On the other hand, research and development are being conducted on lithium-rich manganese-based active materials as a substitute for positive electrode active materials with high nickel content, which have low durability due to structural stability issues and also are high in cost. Lithium-rich manganese-based active materials have high theoretical capacity, but in order to achieve this, the driving voltage has to take 4.4V or higher. However, the high driving voltage causes a decrease in battery life and high-temperature storage characteristics, so that commercialization is not easy.
Another method for achieving high theoretical capacity is to increase the rolling density. If the rolling density is increased, the amount of active material per unit volume increases, which is capable of realizing high capacity. However, if the rolling density is too high, there is a problem of particle cracks, and if the rolling density is too low, there is a problem of low energy density. Thus, it is not easy to adjust this, and the pores inside the secondary particles must be minimized and the denseness between particles must be high. Since this denseness can only be confirmed indirectly, and quantitative analysis is difficult, it is impossible to identify the characteristics of the active material without particle cracks while having maximum energy density.

**[DETAILED DESCRIPTION OF THE INVENTION]**

**[Technical Problem]**

The present disclosure has been designed to solve the above-mentioned problems, and an object of the present disclosure is to provide a positive electrode active material which can achieve optimization of the denseness between particles through the volume of the unit cell derived by analyzing the crystal characteristics of the positive active material particles and the rolling density under low pressure.
Another object of the present disclosure is to provide a positive electrode and a lithium secondary battery, which include a positive electrode active material, and thereby have no particle crack while maximizing energy density through optimization of the rolling density, thereby remarkably decreasing the occurrence of side reactions, improving the life characteristics, and being excellent in capacity characteristics.

**[Technical Solution]**

In order to achieve the above object, in one aspect of the present disclosure, there is provided an electrode assembly comprising a lithium-rich manganese-based transition metal oxide, wherein the denseness (P) derived by the following Equation 1 is 42 to 50.

[Equation 1]

$$P = V_{unit-cell}/d_{400}$$

in Equation 1, $V_{unit-cell}$ is the volume ($\text{Å}^3$) of the unit cell, which is derived through the following Equation 2, and $d_{400}$ is the rolling density ($g/cm^3$) when rolling at 400 kgf,

[Equation 2]

$$V_{unit-cell} = 3\sqrt{3} \times (a^2/2) \times (c/3)$$

in Equation 2, a and c are crystal lattice parameters (Å) derived from XRD measurements of the positive electrode active material.

In order to achieve the above object, in another aspect of the present disclosure, there is provided a positive electrode comprising the positive electrode active material according to the present disclosure.

In order to achieve the above object, in yet another aspect of the present disclosure, there is provided a lithium secondary battery comprising the positive electrode active material according to the present disclosure.

**[DETAILED DESCRIPTION OF THE EMBODIMENTS]**

Terms or words used in the present specification and claims should not be construed as limited to ordinary or dictionary terms, and the present invention should be construed with meanings and concepts that are consistent with the technical idea of the present invention based on the principle that the inventors can appropriately define concepts of the terms to appropriately describe their own invention in the best way.

It should be understood that the terms "comprise," "include", "have", etc. are used herein to specify the presence of stated features, integers, steps, components or combinations thereof, but do not preclude the presence or addition of one or more other features, integers, steps, components, or combinations thereof.

In the present disclosure, "single particle" refers to a particle consisting of one single nodule. In the present disclosure, "nodule" refers to a single crystal lacking any crystalline grain boundary, or alternatively may be a polycrystal in which grain boundaries do not appear when observed in a field of view of 5,000× to 20,000× using a scanning electron microscope (SEM). In the present disclosure, "pseudo-single particle" refers to a particle that is a composite formed of 30 or fewer nodules.

In the present disclosure, a "secondary particle" refers to a particle formed by agglomeration of several tens to several hundreds of primary particles. More specifically, a secondary particle is an agglomerate of 50 primary particles or more.

In the present disclosure, when a "particle" is described, any one or all of a single particle, a pseudo-single crystal, a primary particle, a nodule, and a secondary particle may be encompassed.

In the present disclosure, "$D_{50}$" refers to a particle size corresponding to a cumulative volume of 50% in the particle size distribution of a positive electrode active material. The average particle size $D_{50}$ may be measured by a laser diffraction method. For example, the average particle diameter may be measured by dispersing a positive electrode active material powder in a dispersion medium, introducing the resultant into a commercially available laser diffraction particle size analyzer (e.g., Microtrac MT 3000), performing irradiation with ultrasonic waves at a frequency of about 28 kHz and an output of 60 W, obtaining a volume-cumulative particle size distribution graph, and then determining a particle size corresponding to a cumulative volume of 50%.

The present disclosure will be described in more detail below.

**Positive electrode active material**

A positive electrode active material according to the present disclosure includes a lithium-rich manganese-based transition metal oxide, wherein the denseness (P) derived by the following Equation 1 is 42 to 50.

[Equation 1]

$$P = \frac{V_{unit-cell}}{d_{400}}$$

in Equation 1, $V_{unit-cell}$ is the volume ($\text{Å}^3$) of the unit cell, which is derived through the following Equation 2, and $d_{400}$ is the rolling density ($g/cm^3$) when rolling at 400 kgf,

[Equation 2]

$$V_{unit-cell} = 3\sqrt{3} \times \left(\frac{a^2}{2}\right) \times \left(\frac{c}{3}\right)$$

in Equation 2, a and c are crystal lattice parameters ($\text{Å}$) derived from XRD measurements of the positive electrode active material.

According to one embodiment of the present disclosure, the positive electrode active material includes a lithium-rich manganese-based transition metal oxide having a denseness of 42 to 50. The denseness may express how closely particles are packed together without cracking, that is, how densely particles are packed without damaging particles. Preferably, the denseness may be 43 or more, or 44 or more, and 49 or less, or 48 or less. If the denseness is less than 42, it means that the volume of unit cell is small relative to the same rolling density, wherein it can be seen that the volume of the unit cell may depend on the lattice parameters, and the lattice parameters may vary depending on factors such as conditions of the sintering process, molar ratio of transition metal, molar ratio of lithium and transition metal, doping, coating or the like, the lattice parameters become small due to certain factors, and the mobility of lithium ions is relatively inferior.

On the other hand, when the denseness of the lithium-rich manganese-based transition metal oxide according to an embodiment of the present disclosure is greater than 50, there may be several causes where the rolling density relative to the unit cell volume is small due to an imbalance in the ratio between the unit cell volume and the rolling density, but it may refer to having structure and particle size characteristics that prevent them from being packed well due to problems such as voids, shape, and particle size within the secondary particles. In this case, even if rolled at an appropriate pressure, the packing may not be made properly, which may cause problems that the capacity is low due to low energy density, or the life is shortened due to particle cracks.

The denseness of such particles derives a rolling density under low pressure, that is, a value similar to the true density of actual particles, specifies the ratio of this to the volume of the unit cell existing in the crystal structure, thereby offering the advantages of being able to maximizing the energy density and provide an active material with high capacity characteristics even before the actual rolling process.

The lattice parameters a and c are lattice parameters meaning any one side of the unit cell in the crystal structure. The positive electrode active material according to an embodiment of the present disclosure usually has a layered structure (R-3m) and a rock-salt monoclinic structure (C2/m). In such a structure, the sides that exist on the x-axis and the y-axis may be represented by a, and the sides that exist on the z-axis may be represented by c. In the case of Equation 2 according to an embodiment of the present disclosure, the lattice parameters were applied assuming that the crystal structure of the positive electrode active material was all layered. The a may be 2.83 to 2.90, and the c may be 14.21 to 14.31.

According to one embodiment of the present disclosure, $d_{400}$ in Equation 1 is the density of lithium-rich manganese-based transition metal oxide when rolling at 400 kgf, which may be close to the true density of actual particles. The $d_{400}$ may be 2.00 $g/cm^3$ to 2.40 $g/cm^3$, preferably 2.03 $g/cm^3$ or more, 2.05 $g/cm^3$ or more, 2.07 $g/cm^3$ or more, 2.10 $g/cm^3$ or more, or 2.12 $g/cm^3$ or more, preferably 2.37 $g/cm^3$ or less, 2.35 $g/cm^3$ or less, 2.33 $g/cm^3$ or less, 2.30 $g/cm^3$ or less, When $d_{400}$ is within the above range, the ratio to the volume of the unit cell can be appropriately adjusted. Even if the volume of the unit cell is derived from lattice parameters that are determined to some extent, the limited range of $d_{400}$ may be meaningful, considering that the lattice parameters themselves can vary over relatively large ranges. Namely, the density range of $d_{400}$ may be a basic condition for optimizing energy density depending on whether the volume of the unit cell is satisfied.

According to one embodiment of the present disclosure, the rolling density of the lithium-rich manganese-based transition metal oxide may be 2.30 g/cm$^3$ or more. At this time, the pressure during rolling may be 2000 kgf. The rolling density may be 2.35 g/cm$^3$ or more, 2.37 g/cm$^3$ or more, 2.40 g/cm$^3$ or more, 2.42 g/cm$^3$ or more, or 2.43 g/cm$^3$ or more. This range has the advantage that the energy density of the positive electrode can be maximized.

The positive electrode active material according to the present disclosure may include a lithium-rich manganese-based transition metal oxide, and specifically, it may include a lithium-rich manganese-based transition metal oxide having the composition shown in the following Chemical Formula 1.

[Chemical Formula 1]         $Li_{1+a}[Mn_{1-b-c-d}Ni_bM1_cM2_d]O_{2-e}A_e$

in Chemical Formula 1, M1 and M2 each independently include at least one selected from the group consisting of Co, Fe, Cr, V, Cu, Zn, Ti, Al, Mg, B, W, Ga, In, Ru, Nb, Sn, Sr, Ta, Y and Zr, A includes at least one selected from the group consisting of N, P, S, F and Cl, and $0.1 \leq a \leq 0.6$, $0 < b \leq 0.5$, $0 \leq c \leq 0.5$, $0 \leq d \leq 0.05$, $0 < b+c+d \leq 0.5$ and $0 \leq e \leq 0.05$.

In Chemical Formula 1, M1 includes Co, Al, or a combination thereof, and preferably, it may be Co or a combination of Co and Al, M2 includes at least one selected from the group consisting of Fe, Cr, V, Cu, Zn, Ti, Al, Mg, B, W, Ga, In, Ru, Nb, Sn, Sr, Ta, Y and Zr, preferably, it may include at least one selected from the group consisting of W, Zr, Y, Mg, and Ti, and more preferably, it may include W, Zr, Y, Ti, or a combination thereof. The M2 element is not necessarily included, but when included in an appropriate amount, it can play a role in promoting the growth of particles during sintering, or improving the stability of the crystal structure. In addition, the A is an anion substituted at the oxygen site, and may include N, P, S, F, or Cl.

The 1+a represents the molar ratio of lithium in the lithium-rich manganese-based transition metal oxide, which may be $0.1 \leq a \leq 0.6$, $0.1 \leq a \leq 0.5$, or $0.2 \leq a \leq 0.5$.

The b represents the molar ratio of nickel to all metals except lithium in the lithium-rich manganese-based transition metal oxide, which may be $0 \leq b \leq 0.50$, $0.05 \leq b \leq 0.50$, $0.10 \leq b \leq 0.50$ or $0.10 \leq b \leq 0.45$.

The c represents the molar ratio of the M1 element among all metals except lithium in the lithium-rich manganese-based transition metal oxide, which may be $0 \leq c \leq 0.50$, $0.05 \leq c \leq 0.50$, $0.10 \leq c \leq 0.50$ or $0.10 \leq c \leq 0.45$.

The d represents the molar ratio of the M2 element among all metals except lithium in the lithium-rich manganese-based transition metal oxide, which may be $0 \leq d \leq 0.05$, $0 \leq d \leq 0.02$, or $0 \leq d \leq 0.01$.

In addition, the sum of the molar ratios of the remaining metals excluding manganese, nickel, and M1 and M2 metals among all metals excluding lithium in the lithium-rich manganese-based transition metal oxide, namely, b+c+d may be $0 < b+c+d \leq 0.5$, $0.05 \leq b+c+d \leq 0.50$, $0.10 \leq b+c+d \leq 0.50$ or $0.10 \leq b+c+d \leq 0.45$. Therefore, the molar ratio of Mn may always be 0.5 or more.

On the other hand, the lithium-rich manganese-based transition metal oxide may further include a coating layer including at least one coating element selected from the group consisting of Al, Ti, W, B, F, P, Mg, Ni, Co, Fe, Cr, V, Cu, Ca, Zn, Zr, Nb. Mo, Sr, Sb, Bi, Si and S on the particle surface.

If a coating layer exists on the surface of the lithium-rich manganese-based transition metal oxide particles, contact between the electrolyte and the lithium-rich manganese-based transition metal oxide is suppressed by the coating layer, which makes it possible to obtain the effect of reducing transition metal elution or gas generation due to side reactions with the electrolyte solution.

## Method for preparing positive electrode active material

Next, a method for preparing a positive electrode active material powder of the present disclosure will be described.

The method for preparing the positive electrode active material powder according to the present disclosure includes (S1) adding a transition metal-containing solution containing cations of nickel(Ni), manganese(Mn), and M1, a basic aqueous solution, and an ammonium solution and performing a coprecipitation reaction to prepare a positive electrode active material precursor, and (S2) mixing the positive electrode active material precursor and a lithium raw material and heat treating them to prepare positive electrode active material powder.

In addition, the prepared positive electrode active material includes a lithium-rich manganese-based transition metal oxide that has the form of secondary particles formed by agglomeration of several tens to several hundreds of primary particles, or has at least one form of a single particle consisting of one nodule that can be formed through coarsening of a crystal grain and a pseudo-single particle which is a composite of 30 nodules or less, or a mixed form of these two.

Next, each step of the method for preparing a positive electrode active material powder will be described in detail.

First, a transition metal-containing solution containing cations of nickel (Ni), manganese (Mn), and M1 is prepared. For example, the transition metal-containing solution may include a nickel-containing raw material, a manganese-containing raw material, and an M1-containing raw material, and the M1-containing raw material may be a cobalt-containing raw material and/or an aluminum-containing raw material.

Subsequently, the positive electrode active material precursor may be prepared by adding an ammonium cation-containing complex forming agent and a basic aqueous solution to a transition metal solution and causing a coprecipitation reaction.

The nickel-containing raw material may include, for example, nickel containing acetate, nitrate, sulfate, halide, sulfide, hydroxide, oxide, oxyhydroxide, or the like, and specifically, may include $Ni(OH)_2$, NiO, NiOOH, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, nickel halide, or a combination of them, but is not limited thereto.

The manganese-containing raw material may include, for example, manganese containing acetate, nitrate, sulfate, halide, sulfide, hydroxide, oxide, oxyhydroxide, or a combination thereof, and specifically, may include manganese oxide such as $Mn_2O_3$, $MnO_2$, $Mn_3O_4$.; a manganese salt such as $MnCO_3$, $Mn(NO_3)_2$, $MnSO_4$, manganese acetate, dicarboxylic acid manganese salt, manganese citrate, fatty acid manganese salt; manganese oxyhydroxide, manganese chloride, or a combination of them, but is not limited thereto.

The cobalt-containing raw material may include cobalt containing acetate, nitrate, sulfate, halide, sulfide, hydroxide, oxide or oxyhydroxide, and specifically, may include $Co(OH)_2$, CoOOH, $Co(OCOCH_3)_2 \cdot 4H_2O$, $Co(NO_3)_2 \cdot 6H_2O$, $CoSO_4$, $Co(SO_4)_2 \cdot 7H_2O$, or a combination of them, but is not limited thereto.

The aluminum-containing raw material may include, for example, $Al_2O_3$, $Al(OH)_3$, $Al(NO_3)_3$, $Al_2(SO_4)_3$, $(HO)_2AlCH_3CO_2$, $HOAl(CH_3CO_2)_2$, $Al(CH_3CO_2)_3$ aluminum halide, or a combination of them.

The transition metal containing solution may be prepared by adding the nickel containing raw material, the manganese containing raw material and the M1 containing raw material to a solvent, specifically water, or a mixed solvent of water and an organic solvent (for example, alcohol, etc.) that mixes with water to form a homogeneous mixture, or by mixing an aqueous solution of the nickel containing raw material, an aqueous solution of the manganese containing raw material and the M1 containing raw material.

The ammonium cation containing complex forming agent may include, for example, $NH_4OH$, $(NH_4)_2SO_4$, $NH_4NO_3$, $NH_4Cl$, $CH_3COONH_4$, $NH_4CO_3$, or a combination of them, but is not limited thereto. Meanwhile, the ammonium cation containing complex forming agent may be used in the form of an aqueous solution, and in this instance, a solvent may include water or a mixture of water and an organic solvent (specifically, alcohol, etc.) that mixes with water to form a homogeneous mixture.

The basic compound may include hydroxide or hydrate of alkali metal or alkaline earth metal such as NaOH, KOH or $Ca(OH)_2$, or a combination of them. The basic compound may also be used in the form of an aqueous solution, and in this instance, a solvent may include water, or a mixture of water and an organic solvent (specifically, alcohol, etc.) that mixes with water to form a homogeneous mixture.

The basic compound may be added to adjust the pH of the reaction solution, and may be added in such an amount that the pH of the metal solution is 8 to 12.

The coprecipitation reaction may be performed at a temperature in the range of 35°C to 80°C in an inert atmosphere of nitrogen or argon.

Accordingly, a positive electrode active material precursor containing cations of nickel, manganese, and M1 can be prepared.

Positive electrode active material precursor particles of nickel-manganese-M1 hydroxide are produced by the above-mentioned process, and precipitate in the reaction solution. The positive electrode active material precursor having the manganese (Mn) content of 50 mol% or more, 55 mol% or more, preferably 60 mol% or more, more preferably 63 mol% or more, more preferably 65 mol% or more, still more preferably 66 mol% or more, further more preferably 67 mol% or more, in the total metal content may be prepared by adjusting the concentration of the nickel containing raw material, the manganese containing raw material and the M1 containing raw material. The precipitated positive electrode active material precursor particles are separated by the common method, and dried to prepare the positive electrode active material precursor.

Subsequently, the positive electrode active material precursor is mixed with the lithium raw material and goes through heat treatment.

The lithium raw material may include, without particular limitation, any type of material that dissolves in water, and may include, for example, lithium containing sulfate, nitrate, acetate, carbonate, oxalate, citrate, halide, hydroxide or oxyhydroxide. Specifically, the lithium raw material may include $Li_2CO_3$, $LiNO_3$, $LiNO_2$, LiOH, $LiOH \cdot H_2O$, LiH, LiF, LiCl, LiBr, LiI, $CH_3COOLi$, $Li_2O$, $Li_2SO4$, $CH_3COOLi$, $Li_3C_6H_5O_7$, or the like. Any one or a mixture of two or more of these may be used.

The positive electrode active material precursor and the lithium raw material may be mixed at a molar ratio of 1:1 to 1:1.1. The positive electrode active material precursor and the lithium raw material may be mixed at a molar ratio of, for example, about 1:1, about 1:1.02, about 1:1.05, about 1:1.07, or about 1:1.10, but are not limited thereto.

The heat treatment may be performed in a temperature range of 750°C to 1000°C in the case of a manganese-rich based lithium-rich manganese-based transition metal complex oxide with a manganese (Mn) content of 50 mol% or more. The heat treatment may be preferably performed, for example, in a temperature range of 800°C to 975°C, and more preferably in a temperature range of 850°C to 950°C.

The positive electrode active material prepared thereby can reduce particle crack and strain within the crystal structure in the rolling process or in a charge and discharge of a lithium secondary battery containing the same, and can improve the initial resistance characteristics.

The heat treatment may be performed under an air or oxygen atmosphere, for example, for 4 to 12 hours. Specifically, the heat treatment may be performed, for example, for 4 hours or more, 6 hours or more, 8 hours or more, or 10 hours or more, and 12 hours or less, 10 hours or less, 8 hours or less, and 6 hours or less.

Meanwhile, when attempting to prepare a lithium-rich manganese-based transition metal oxide containing M2 metal, an M2 metal-containing raw material may be further mixed during the coprecipitation reaction or in the sintering step. At this time, the M2 metal-containing raw material may be an acetate, carbonate, nitrate, sulfate, halide, sulfide, or oxide of M2 metal.

Meanwhile, when attempting to form a coating layer on the surface of the lithium-rich manganese-based transition metal oxide, after the heat treatment, a step of mixing the lithium-rich manganese-based transition metal oxide prepared through the heat treatment and the coating raw material and then heat-treating the mixture may be further performed. At this time, the mixing may include solid-phase mixing or liquid-phase mixing, and the heat treatment may be performed at an appropriate temperature depending on the coating raw material. For example, the heat treatment of the coating process may be performed at a temperature ranging from 200°C to 700°C, or 300°C to 600°C, but is not limited thereto.

Further, when preparing the positive electrode active material powder of the present disclosure, it is preferable not to perform a washing process after the heat treatment. Conventionally, when preparing a lithium composite transition metal oxide, it was common to perform a washing process after heat treatment in order to reduce the content of lithium byproducts. However, according to the research conducted by the present inventors, it was found that when a washing process was performed during the production of lithium transition metal oxides, the surface properties of the lithium transition metal oxide deteriorate and the resistance increases during the water washing process. Therefore, when preparing the positive electrode active material of the present disclosure, it is preferable not to perform water washing, but to consume the remaining lithium on the surface of the lithium transition metal oxide in the process of forming the coating layer. Wen the positive electrode active material is prepared without washing the lithium transition metal oxide in this manner, it is possible to suppress an increase in resistance due to surface defects.

## Positive electrode

According to the present disclosure, there is provided a positive electrode comprising the positive electrode active material powder of the present disclosure. Specifically, the positive electrode includes a positive electrode current collector and a positive electrode active material layer formed on the positive electrode current collector, wherein the positive electrode active material layer includes the positive electrode active material powder according to the present disclosure. Since the positive electrode active material powder has been described above, a detailed description thereof will be omitted, and only the remaining configuration will be described in detail below.

The positive electrode current collector may contain a metal with high conductivity, and the positive electrode active material layer is easily adhered, but is not particularly limited as long as it has no reactivity within the voltage range of the battery. As the positive electrode current collector, for example, stainless steel, aluminum, nickel, titanium, sintered carbon, or aluminum or stainless steel of which surface is treated with carbon, nickel, titanium, silver, or the like may be used. The positive electrode current collector may generally have a thickness of 3 to 500 $\mu$m, and the positive electrode current collector may have fine protrusions and depressions formed on a surface thereof to enhance adherence of a positive electrode active material. For example, the positive electrode current collector may be used in various forms such as a film, a sheet, a foil, a net, a porous body, a foaming body, and a non-woven fabric structure.

The positive electrode active material layer may optionally include a conductive material and a binder as needed, along with the positive electrode active material powder.

At this time, the positive electrode active material powder may be included in an amount of 80 to 99% by weight, more specifically 85 to 98.5% by weight, based on the total weight of the positive electrode active material layer. When the positive electrode active material powder is included in the above content range, it can exhibit excellent capacity characteristics.

The conductive material is used to impart electrical conductivity to the electrode, and the conductive material can be used without particular limitation as long as it has electronic conductivity without causing chemical changes in the battery to be configured. Specific examples thereof include graphite such as natural graphite and artificial graphite; carbon-based materials such as carbon black, acetylene black, ketjen black, channel black, furnace black, lamp black, thermal black, and carbon fiber; metal powder or metal fibers such as copper, nickel, aluminum and silver; conductive tubes such as carbon nanotube; conductive whiskey such as zinc oxide and potassium titanate; conductive whiskers such as zinc oxide and potassium titanate; conductive metal oxides such as titanium oxide; or a conductive polymer such as a polyphenylene derivative, and any one type alone or a mixture of two or more types of them can be used. The conductive material may be contained in an amount of 0.1 to 15% by weight based on the total weight of the positive electrode active material layer.

The binder serves to improve adhesion between the positive electrode active materials and adhesive force between the positive active material and the current collector. Specific examples thereof may include polyvinylidene fluoride(PVDF), a polyvinylidenefluoride-hexafluoropropylene copolymer(PVdF-co-HFP), polyvinyl alcohol, polyacrylonitrile, polymethymethaxrylate, carboxymethylcellulose(CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated EPDM, styrene-butadiene rubber (SBR), fluorine rubber, polyacrylic acid, and a polymer having the hydrogen thereof substituted with Li, Na, or Ca, or various copolymers thereof, and any one type alone or a mixture of two or more types of them can be used. The binder may be contained in an amount of 0.1 to 15% by weight based on the total weight of the positive electrode active material layer.

The positive electrode may be produced according to the typical positive electrode producing method, except that the positive electrode uses the above-mentioned positive electrode active material powder. Specifically, the positive electrode can be prepared by dissolving or dispersing the above-mentioned positive electrode active material powder and optionally a binder, a conductive material, and a dispersant in a solvent to prepare a positive electrode slurry composition, applying the slurry composition onto a positive electrode current collector, followed by drying and rolling.

Solvents generally used in the art may be used as the solvent, and examples thereof may include dimethyl sulfoxide (DMSO), isopropyl alcohol, N-methylpyrrolidone (NMP), dimethyl formamide (DMF), acetone, or water, etc., and any one alone or a mixture of two or more thereof may be used. An amount of the solvent to be used is sufficient to dissolve or disperse the positive electrode active material, conductive material, binder and dispersant in consideration of the applying thickness of a slurry and manufacturing yield, and to have a viscosity capable of exhibiting excellent thickness uniformity when subsequently applied for producing the positive electrode.

Alternatively, the positive electrode may be produced by casting the positive electrode slurry on a separate support, and then laminating a film, which is obtained by peeling off the support, on the positive electrode current collector.

**Electrochemical device**

Next, an electrochemical device according to the present disclosure will be described. The electrochemical device according to the present disclosure includes the above-mentioned positive electrode. The electrochemical device may specifically be a battery, a capacitor, etc., and more specifically, may be a lithium secondary battery.

The lithium secondary battery specifically includes: a positive electrode; a negative electrode disposed to face the positive electrode; a separator disposed between the positive electrode and negative electrode; and an electrolyte, and the positive electrode is the same as that described above. Thereby, a detailed description thereof will be omitted, and only the remaining configuration will be described in detail below.

In addition, the lithium secondary battery may optionally further include: a battery container for storing an electrode assembly of the positive electrode, negative electrode, and separator; and a sealing member for sealing the battery container.

In the lithium secondary battery, the negative electrode includes a negative electrode current collector and a negative electrode active material layer disposed on the negative electrode current collector.

The negative electrode current collector is not particularly limited as long as having high conductivity without causing any chemical changes in a battery, and for example, copper, stainless steel, aluminum, nickel, titanium, sintered carbon, copper or stainless steel of which a surface is surface-treated with carbon, nickel, titanium, silver, etc., or an aluminum-cadmium alloy may be used. In addition, the negative electrode current collector may conventionally have a thickness of 3 $\mu$m to 500 $\mu$m, and similarly to the positive electrode collector, the negative electrode current collector may have fine protrusions and depressions formed on a surface thereof to enhance adherence of a negative electrode active material. For example, the negative electrode current collector may be used in various forms such as a film, a sheet, a foil, a net, a porous body, a foaming body, and a non-woven fabric structure.

The negative electrode active material layer optionally includes a binder and a conductive material in addition to the negative electrode active material.

As the negative electrode active material, a compound capable of reversible intercalation and deintercalation of lithium can be used. Specific examples thereof may include a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as $SiO_\beta$ ($0 < \beta < 2$), $SnO_2$, vanadium oxide, and lithium vanadium oxide; a composite containing the metallic compound and the carbonaceous material, such as Si-C composite or Sn-C composite, and any one alone or a mixture of two or more thereof can be used. Further, a metallic lithium thin film may be used as the negative electrode active material. Further, both low-crystalline carbon and highly-crystalline carbon can be used as the carbon material. Typical examples of the low-crystalline carbon include soft carbon and hard carbon. Typical examples of the highly-crystalline carbon include amorphous, plate-like, flaky, spherical or fibrous natural graphite or artificial graphite, kish graphite, pyrolytic carbon, mesophase pitch-based carbon fiber, meso-carbon microbeads, high-temperature sintered carbon such as mesophase pitches and petroleum or coal tar pitch derived cokes.

The negative electrode active material may be contained in an amount of 80% by weight to 99% by weight based on the total weight of the negative electrode active material layer.

The binder is a component that assists in the binding between the conductive material, the active material and the current collector, and is usually added in an amount of 0.1% by weight to 10% by weight based on the total weight of the negative electrode active material layer. Examples of such a binder may include polyvinylidene fluoride(PVDF), polyvinyl alcohol, carboxymethyl cellulose(CMC), starch, hydroxypropylcellulose, regenerated cellulose, polyvinyl pyrrolidone, polytetrafluoroethylene, polyethylene, polypropylene, an ethylene-propylene-diene monomer(EPDM), a sulfonated EPDM, styrene-butadiene rubber, nitrile-butadiene rubber, fluoro rubber, or various copolymers thereof.

The conductive material is a component that further improves the conductivity of the negative electrode active material, and may be included in an amount of 10% by weight or less, preferably 5% by weight or less based on the total weight of the negative electrode active material layer. Such a conductive material is not particularly limited as long as it has conductivity without causing a chemical change in the battery, and, for example, graphite such as natural graphite and artificial graphite; carbon black such as acetylene black, ketjen black, channel black, furnace black, lamp black, or thermal black; conductive fibers such as carbon fibers or metal fibers; fluorinated carbon; metal powder such as aluminum powder, and nickel powder; conductive whiskers such as zinc oxide whiskers and potassium titanate whiskers; conductive metal oxide such as titanium oxide; or polyphenylene derivatives, can be used.

The negative electrode active material layer can be prepared by coating and drying a negative electrode slurry composition prepared by dissolving or dispersing the negative electrode active material and optionally the binder and the conductive material in a solvent onto the negative electrode current collector, or alternatively, can be prepared by casting the negative electrode slurry composition onto a separate support and then laminating the film obtained by being peeled off from this support onto the negative electrode current collector.

On the other hand, in the lithium secondary battery, the separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film produced using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. Further, a typical porous non-woven fabric, for example, a non-woven fabric formed of glass fiber having a high melting point, polyethylene terephthalate fiber, or the like may be used. Further, a coated separator including a ceramic component or a polymer material may be used to secure heat resistance or mechanical strength, and may be selectively used in a single-layered or a multilayered structure.

In addition, the electrolyte used in the present disclosure may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the manufacturing of a lithium secondary battery, but is not limited thereto.

Specifically, the electrolyte may include an organic solvent and a lithium salt.

Any organic solvent may be used without particular limitation as long as it can serve as a medium through which ions involved in an electrochemical reaction of a battery can move. Specifically, as the organic solvent, an ester-based solvent such as methyl acetate, ethyl acetate, $\gamma$-butyrolactone, and $\epsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate(DEC), methylethyl carbonate(MEC), ethylmethyl carbonate(EMC), ethylene carbonate(EC), and propylene carbonate (PC); an alcohol-based solvent such as ethyl alcohol and isopropyl alcohol; nitriles such as R-CN (where R is a linear, branched, or cyclic hydrocarbon group having 2 to 20 carbon atoms, and may include a double-bond aromatic ring or ether bond); amides such as dimethylformamide; dioxolanes such as 1,3-dioxolane; or sulfolanes can be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), which can increase charging/-discharging performance of a battery, is more preferable.

The lithium salt can be used without particular limitation as long as it may provide lithium ions used in a lithium secondary battery. Specifically, the anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$,

$(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$. As the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, $LiB(C_2O_4)_2$, or the like can be used. The lithium salt may be used in a concentration range of 0.1 M to 2.0 M. When the concentration of the lithium salt is included within the above range, the electrolyte has suitable conductivity and viscosity, thereby exhibiting excellent electrolyte performance, and lithium ions can effectively move.

In the electrolyte, in order to improve the life characteristics of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like can be further included. At this time, the additive may be included in an amount of 0.1 to 5 parts by weight based on a total weight of the electrolyte.

## EXAMPLE

Embodiments of the present disclosure have been described in detail above, so that those skilled in the technical field to which the invention belongs can easily carry out them. However, the present disclosure can be modified in various different ways, and is not limited to the embodiments set forth herein.

## Example 1

$Ni_{0.83}Co_{0.11}Mn_{0.06}(OH)_2$ precursor synthesized by a coprecipitation reaction was mixed with LiOH so that LiOH and Li/Me (Ni+Mn) molar ratio was 1.38, and sintered in oxygen atmosphere to prepare a positive electrode active material having the composition $Li_{1.38}Ni_{0.37}Mn_{0.63}O_2$.

## Example 2

A positive electrode active material having the same composition as in Example 1 but having the unit cell volume and rolling density at 400 kgf shown in Table 1 below was prepared.

## Example 3

A positive electrode active material having the same composition as in Example 1 but having the unit cell volume and rolling density at 400 kgf shown in Table 1 below was prepared.

## Example 4

A positive electrode active material having the same composition as in Example 1 but having the unit cell volume and rolling density at 400 kgf shown in Table 1 below was prepared.

## Comparative Example 1

A positive electrode active material having the same composition as in Example 1 but having the unit cell volume and rolling density at 400 kgf shown in Table 1 below was prepared.

## Comparative Example 2

A positive electrode active material having the same composition as in Example 1 but having the unit cell volume and rolling density at 400 kgf shown in Table 1 below was prepared.

## Comparative Example 3

A positive electrode active material having the same composition as in Example 1 but having the unit cell volume and rolling density at 400 kgf shown in Table 1 below was prepared.

## Comparative Example 4

A positive electrode active material having the same composition as in Example 1 but having the unit cell volume and rolling density at 400 kgf shown in Table 1 below was prepared.

**Comparative Example 5**

A positive electrode active material having the same composition as in Example 1 but having the unit cell volume and rolling density at 400 kgf shown in Table 1 below was prepared.

**Experimental Example 1: Measurement of characteristics of positive electrode active material**

1) Derivation of lattice parameters a and c: Measurement was performed by X-ray diffraction (XRD) using Cu-K$\alpha$ X-rays (Xr$\alpha$). Specifically, measurement was performed at 40 kV based on a Cu-Ka target using Rikaku's XRD equipment. The prepared particles were put in a holder, and irradiated with X-rays, and the resulting diffraction lattice was analyzed to measure the lattice parameters, and the unit lattice volume was derived according to Equation 2.
2) Rolling density when rolling at 400 kgf: The rolling density of the positive electrode active material was measured using a density measuring instrument (Caver Pellet Press). Specifically, 5 g of the positive electrode active material was divided into portions and packed without any gap in a cylindrical holder with a diameter of 13 mm, and then a pressure of 400 kgf was applied to measure the rolling density.

[Table 1]

|  | Unit cell volume ($Å^3$) | Rolling density (@400kgf) | Denseness (P) |
|---|---|---|---|
| Example 1 | 101.51 | 2.29 | 44.33 |
| Example 2 | 101.23 | 2.14 | 47.30 |
| Example 3 | 101.7 | 2.32 | 43.84 |
| Example 4 | 100.8 | 2.04 | 49.41 |
| Comparative Example 1 | 101.79 | 1.85 | 55.02 |
| Comparative Example 2 | 101.86 | 1.9 | 53.61 |
| Comparative Example 3 | 101.4 | 1.98 | 51.21 |
| Comparative Example 4 | 102.4 | 2.03 | 50.44 |
| Comparative Example 5 | 101.5 | 2.42 | 41.94 |

**<Manufacture of Lithium secondary battery>**

The positive electrode active material prepared in each of Examples 1 to 4 and Comparative Examples 1 to 5, a carbon black conductive material, and a PVDF binder were mixed at a weight ratio of 95:2:3 in N-methylpyrrolidone to prepare a positive electrode slurry. The positive electrode slurry was applied onto one surface of the aluminum current collector, dried at 130°C, and then rolled to manufacture a positive electrode.
Graphite as the negative electrode active material, super C as the conductive material, and SBR/CMC as the binder were mixed at a weight ratio of 95.6:1.0:3.4 to prepare a negative electrode slurry, which was then applied onto one surface of the copper current collector, dried at 130°C, and then rolled to manufacture a negative electrode.
A separator was interposed between the positive electrode and the negative electrode to prepare an electrode assembly, which was then located inside a battery case, and then an electrolyte solution was injected into the case to manufacture a lithium secondary battery. The electrolyte solution was prepared by dissolving $LiPF_6$ at a concentration of 1M in a mixed organic solvent of ethylene carbonate/dimethyl carbonate/diethyl carbonate in a volume ratio of 1:2:1 and adding 2 wt.% of vinylene carbonate (VC)..

**Experimental Example 2: Performance measurement of positive electrode active material**

1) Rolling density when rolling at 2000 kgf (2 ton): The rolling density of the positive electrode active material was measured using a density measuring instrument (Caver Pellet Press). Specifically, 5 g of the positive electrode active material was divided into portions and packed without any gaps into a cylindrical holder with a diameter of 13 mm. The rolling density was measured by applying a pressure of 2000 kgf, and the results are listed in Table 2.

2) Capacity characteristics: During activation, measurements were performed under the conditions of electrode loading of 0.35 g/25cm$^2$, upper limit voltage of 4.6V, lower limit voltage of 2.0V, temperature of 40°C, and current of 20 mA, and the results are listed in Table 2 below.

3) Rate characteristics: The discharge capacity was measured by changing only the current to 0.33C in the above capacity characteristics, and the ratio value(%) obtained by dividing the measured value by the discharge capacity in the capacity characteristics is listed in Table 2 below.

[Table 2]

|  | Rolling density (g/cm$^3$) | Initial discharge capacity (mAh) | Rate characteristic (%) |
|---|---|---|---|
| Example 1 | 2.46 | 277 | 70 |
| Example 2 | 2.43 | 293 | 67.2 |
| Example 3 | 2.46 | 282 | 72.3 |
| Example 4 | 2.37 | 281 | 67.6 |
| Comparative Example 1 | 2.15 | 268 | 66.8 |
| Comparative Example 2 | 2.25 | 273 | 66.3 |
| Comparative Example 3 | 2.23 | 272 | 66.1 |
| Comparative Example 4 | 2.25 | 262 | 66.5 |
| Comparative Example 5 | 2.47 | 270 | 64.2 |

Referring to Table 2, it was confirmed that in the case of Examples 1 to 4, they are excellent in the rolling density, the initial discharge capacity was evaluated to be higher than that of Comparative Examples 1 to 5, and the rate characteristics were improved.

**[Industrial Applicability]**

The positive electrode active material for lithium secondary batteries according to the present disclosure identifies active material characteristics in which denseness between particles is maximized by optimizing the ratio of the volume of the unit cell and the rolling density under low pressure, thereby improving energy density.

In addition, the positive electrode for lithium secondary batteries according to the present disclosure has no particle cracks, significantly reduces the occurrence of side reactions, has high energy density, has excellent life characteristics, and can exhibit high capacity characteristics.

**Claims**

1.  A positive electrode active material comprising a lithium-rich manganese-based transition metal oxide, wherein the denseness (P) derived by the following Equation 1 is 42 to 50.

[Equation 1]

$$P = V_{unit-cell}/d_{400}$$

in Equation 1, $V_{unit\text{-}cell}$ is the volume (Å$^3$) of the unit cell, which is derived through the following Equation 2, and $d_{400}$ is the rolling density (g/cm$^3$) when rolling at 400 kgf,

[Equation 2]

$$V_{unit-cell} = 3\sqrt{3} \times (a^2/2) \times (c/3)$$

in Equation 2, a and c are crystal lattice parameters (Å) derived from XRD measurements of the positive electrode active material.

2. The positive electrode active material of claim 1, wherein:
   the denseness (P) is 43 to 49.

3. The positive electrode active material of claim 1, wherein:
   the denseness (P) is 44 to 48.

4. The positive electrode active material of claim 1, wherein:
   the a is 2.85 Å to 2.88 Å, and the c is 14.23 Å to 14.29 Å.

5. The positive electrode active material of claim 1, wherein:
   the $d_{400}$ is 2.00 $g/cm^3$ to 2.40 $g/cm^3$.

6. The positive electrode active material of claim 1, wherein:
   the lithium-rich manganese-based transition metal oxide is represented by the following Chemical Formula 1:

   [Chemical Formula 1]       $Li_{1+a}[Mn_{1-b-c-d}Ni_bM1_cM2_d]O_{2-e}A_e$

   in Chemical Formula 1,

   M1 and M2 each independently include at least one selected from the group consisting of Co, Fe, Cr, V, Cu, Zn, Ti, Al, Mg, B, W, Ga, In, Ru, Nb, Sn, Sr and Zr,
   A includes at least one selected from the group consisting of N, P, S, F and Cl, and
   $0.1 \le a \le 0.6$, $0 \le b \le 0.5$, $0 \le c \le 0.5$, $0 \le d \le 0.05$, $0 < b+c+d \le 0.5$ and $0 \le e \le 0.05$.

7. The positive electrode active material of claim 1, wherein:
   the positive electrode active material has a rolling density of 2.42 $g/cm^3$ or more when rolling at 2000 kgf.

8. A positive electrode comprising the positive electrode active material of any one of claims 1 to 7.

9. A lithium secondary battery comprising the positive electrode of claim 8; a negative electrode; and a separator disposed between the positive electrode and the negative electrode.

10. The lithium secondary battery of claim 9, wherein:
    the negative electrode includes a silicon-based negative electrode active material.

## INTERNATIONAL SEARCH REPORT

| International application No. |
| --- |
| **PCT/KR2023/021251** |

| **A.** | **CLASSIFICATION OF SUBJECT MATTER** |
| --- | --- |

**H01M 4/505**(2010.01)i; **H01M 4/525**(2010.01)i; **H01M 4/131**(2010.01)i; **H01M 10/052**(2010.01)i; **H01M 4/02**(2006.01)i

According to International Patent Classification (IPC) or to both national classification and IPC

| **B.** | **FIELDS SEARCHED** |
| --- | --- |

Minimum documentation searched (classification system followed by classification symbols)

H01M 4/505(2010.01); C01G 53/00(2006.01); H01M 10/052(2010.01); H01M 4/02(2006.01); H01M 4/50(2010.01); H01M 4/52(2010.01); H01M 4/525(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 양극 활물질(cathode active material), 과리튬 망간계 전이금속 산화물(over lithium manganese-based transition metal oxide), 단위셀(unit cell), 압연 밀도(rolling density), 결정 격자 변수(crystal lattice parameter)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | JP 2006-253119 A (MITSUBISHI CHEMICALS CORP.) 21 September 2006 (2006-09-21)<br>See claims 1, 4, 7 and 10; and paragraphs [0020]-[0022], [0048], [0055], [0056], [0099], [0102] and [0110]. | 1-10 |
| A | KR 10-2022-0089243 A (POSCO et al.) 28 June 2022 (2022-06-28)<br>See entire document. | 1-10 |
| A | JP 2007-184145 A (HITACHI VEHICLE ENERGY LTD.) 19 July 2007 (2007-07-19)<br>See entire document. | 1-10 |
| A | JP 2005-089225 A (SEIMI CHEM CO., LTD.) 07 April 2005 (2005-04-07)<br>See entire document. | 1-10 |
| A | JP 2008-293988 A (GS YUASA CORPORATION:KK) 04 December 2008 (2008-12-04)<br>See entire document. | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 April 2024** | **01 April 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/021251**

| Patent document cited in search report | | | Publication date (day/month/year) | Patent family member(s) | | | Publication date (day/month/year) |
|---|---|---|---|---|---|---|---|
| JP | 2006-253119 | A | 21 September 2006 | CN | 101151748 | A | 26 March 2008 |
| | | | | CN | 101151748 | B | 06 October 2010 |
| | | | | JP | 2009-245955 | A | 22 October 2009 |
| | | | | JP | 4432910 | B2 | 17 March 2010 |
| | | | | US | 2009-0011334 | A1 | 08 January 2009 |
| | | | | WO | 2006-085467 | A1 | 17 August 2006 |
| KR | 10-2022-0089243 | A | 28 June 2022 | CN | 116648801 | A | 25 August 2023 |
| | | | | EP | 4266423 | A1 | 25 October 2023 |
| | | | | JP | 2024-503799 | A | 29 January 2024 |
| | | | | KR | 10-2580744 | B1 | 19 September 2023 |
| | | | | WO | 2022-139385 | A1 | 30 June 2022 |
| JP | 2007-184145 | A | 19 July 2007 | US | 2007-0160906 | A1 | 12 July 2007 |
| JP | 2005-089225 | A | 07 April 2005 | JP | 4578790 | B2 | 10 November 2010 |
| JP | 2008-293988 | A | 04 December 2008 | EP | 1391950 | A1 | 25 February 2004 |
| | | | | EP | 1391950 | A4 | 03 May 2006 |
| | | | | EP | 1391950 | B1 | 25 August 2010 |
| | | | | EP | 2144314 | A2 | 13 January 2010 |
| | | | | EP | 2144314 | A3 | 28 July 2010 |
| | | | | EP | 2144314 | B1 | 28 January 2015 |
| | | | | JP | 4556377 | B2 | 06 October 2010 |
| | | | | TW | 541745 | A | 11 July 2003 |
| | | | | TW | 541745 | B | 11 July 2003 |
| | | | | WO | 02-086993 | A1 | 31 October 2002 |
| | | | | WO | 2002-086993 | A1 | 12 August 2004 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220183709